Europäisches Patentamt

European Patent Office

Office européen des brevets

(11) Publication number: **0 428 148 A2**

# EUROPEAN PATENT APPLICATION

(21) Application number: 90121739.8

(51) Int. Cl.5: **C01B 31/32, C04B 35/56**

(22) Date of filing: **13.11.90**

(30) Priority: **13.11.89 ZA 898649**

(43) Date of publication of application:
**22.05.91 Bulletin 91/21**

(84) Designated Contracting States:
**AT DE ES FR IT SE**

(71) Applicant: **AECI LIMITED**
**16th Floor Office Tower Carlton Centre**
**Commissioner Street P.O. Box 1122**
**Johannesburg 2000 Transvaal(ZA)**

(72) Inventor: **Wall, Christopher Denham, 10**
**Kya-Lani Flats**
**Corner of Smuts and Edward Streets**
**Vereeniging, Transvaal Province(ZA)**

(74) Representative: **Bühling, Gerhard, Dipl.-Chem.**
**et al**
**Patentanwaltsbüro Tiedtke-Bühling-Kinne**
**Grupe-Pellmann-Grams-Struif Bavariaring 4**
**W-8000 München 2(DE)**

(54) Process for producing calcium carbide.

(57) A process 10 for producing calcium carbide includes operating a furnace 12 of the kind described by continuously feeding calcium oxide and carbon and/or carbon containing material as feed materials into the furnace chamber, subjecting the feed materials or solid burden in the chamber to a plasma torch generated between the plasma burner and the counter electrode, withdrawing calcium carbide intermittently or continuously by means of the calcium carbide withdrawal means, and withdrawing off gas continuously through the gas withdrawal means. Lime hydrate ($Ca(OH)_2$) material in agglomerated form passes through an elongate dryer 50, while the off gas passes through the dryer countercurrently to the lime hydrate material. The velocity of the gas is sufficient to entrain therein solid particles below a predetermined size and which are present in the lime hydrate material, thereby to pretreat the lime hydrate material by classifying it, and drying and calcining it to form calcium oxide (CaO) material.

EP 0 428 148 A2

# PROCESS FOR PRODUCING CALCIUM CARBIDE

THIS INVENTION relates to a process for producing calcium carbide.

A furnace for producing calcium carbide of which the Applicant is aware comprises a refractory lined shell defining an enclosed furnace chamber having a base, a peripheral side wall protruding upwardly from the base, and a roof closing off the side wall; feed means for feeding calcium oxide and/or a calcium oxide containing substance, as well as carbon and/or a carbon containing substance in particulate form into the furnace chamber; a plasma burner protruding into the chamber; a counter electrode at the base of the furnace chamber; calcium carbide withdrawal means for withdrawing calcium carbide from the furnace chamber; and gas withdrawal means for withdrawing gases from the furnace chamber. In use, a transferred or non-transferred plasma arc is generated between the cathode and the anode. The burden of calcium oxide and/or calcium oxide containing substance, and carbon or carbon containing substance is thus subjected to the plasma arc, resulting in smelting of the solid burden, and production of calcium carbide and off gas. The calcium carbide is continuously or intermittently removed from the chamber by means of the calcium carbide withdrawal means, while off gas is continuously withdrawn by means of the gas withdrawal means. Such a furnace is hereinafter also referred to as 'a furnace of the kind described'.

According to the invention, in a process for producing calcium carbide which includes operating a furnace of the kind described by continuously feeding calcium oxide and carbon and/or carbon containing material as feed materials into the furnace chamber, subjecting the feed materials or solid burden in the chamber to a plasma torch generated between the plasma burner and the counter electrode, withdrawing calcium carbide intermittently or continuously by means of the calcium carbide withdrawal means, and withdrawing off gas continuously through the gas withdrawal means, the improvement comprising passing lime hydrate ($Ca(OH)_2$) material in agglomerated form through an elongate dryer, while passing the off through an elongate dryer, while passing the off gas through the dryer countercurrently to the lime hydrate material with the velocity of the gas being sufficient to entrain therein solid particles below a predetermined size and which are present in the lime hydrate material, thereby to pretreat the lime hydrate material by classifying it, and drying and calcining it to form calcium oxide (CaO) material.

The lime hydrate material may be in any suitable agglomerated form such as in briquette, pellet, ball, granule, flake, or the like form, but will normally be in briquette form, and the dryer may be a direct heating rotary kiln. Sufficient air may then also be introduced into the rotary kiln to form a combustible mixture with the off gas, and the combustible gas mixture burnt in the kiln.

At least a portion of the calcium oxide material thus formed may be fed to the furnace as feed material for the calcium carbide production.

The predetermined size may be about 1 mm so that the feed material has particles of a size greater than 1mm, typically in the region of 1-25 mm. Thus, the velocity of the gas is sufficient to ensure adequate gas classification such that the feed material is substantially free of all solid particles below 1 mm. Some breakage of $Ca(OH)_2$ material will take place in the rotary kiln as the feed material is converted to CaO, but this can be tolerated in the plasma arc furnace, provided that substantially all particles less than said 1 mm are removed with the off gas stream from the rotary kiln by the gas classification achieved in the kiln.

In one embodiment of the invention, the off gas may be routed directly to the kiln, without any intermediate treatment of the off gas.

However, in another embodiment of the invention, the off gas may be pretreated before entering the kiln by cooling it down so that at least some condensation or solidification of gaseous substances present in the off gas takes place; and separating at least some of the condensed or solid substances from the off gas, thereby to produce pretreated off gas which then passes to the kiln.

In the furnace chamber, the basic reactions which take place are

$$CaO + C \rightleftharpoons Ca + CO \text{ (off gas)}$$
$$Ca + 2C \rightleftharpoons CaC_2$$

However, the feed materials also contain impurities such as MgO, MnO, $Fe_2O_3$, $Al_2O_3$ and $SiO_2$. The combined quantity of these impurities is typically in the order of 1-2% by mass, based on calcium oxide introduced into the furnace, or 12-14% by mass, based on the mass of carbon introduced. These impurities also react with carbon in the furnace chamber, to produce elemental Mg, Fe, Al and Si respectively, together with CO. When subjected to the furnace reaction temperature of $1900\degree C$ to $2300\degree C$, magnesium and aluminium vapour form.

The elemental impurities (Mg, Al and Si) recombine with CO in the off gas, to form solids, ie MgO, $Al_2O_3$ and $SiO_2$. Normally when there is no pretreatment of the off gas, these solid impurities deposit onto the feed material, and are hence recycled to the furnace chamber. This results in increased furnace energy requirements since energy is then again required to treat them in the furnace chamber. Thus energy requirements are reduced with the improvement of the present invention. Furthermore, such solid impurities, when not removed in the dust cyclone provided by the present invention, would also tend to deposit on, and clog up, downstream equipment.

The cooling down of the off gas may be effected by introducing, eg spraying, water into the off gas. Sufficient water will thus be injected to obtain an off gas temperature drop sufficient to give a desired degree of impurity solidification or condensation.

On introducing the water into the off gas, the shift reaction, which is endothermic takes place, viz
$$CO + H_2O \rightarrow H_2 + CO_2$$

In addition some of the water is converted into water vapour. This results in a drop in the gas temperature, typically from around $2000^\circ C$ to about $500^\circ C$, which in turn ensures that at least a substantial proportion of the impurities are converted to their condensed oxide form. Typically, the particles of impurities have a size of 2-5 microns.

The separation or removal of the impurities, which will thus be in dust-like particulate form, from the off gas may be effected in a dust cyclone.

The off gas from the dust cyclone may then pass directly, ie without further treatment, such as further cleaning, thereof, to the rotary kiln.

Use of the rotary kiln thus avoids the need to clean further the off gas emerging from the dust cyclone.

The off gas from the kiln may then be subjected to a further solids removal step to remove entrained solids or fines therefrom. Typically, this may be effected in at least one further dust cyclone. The fines consist substantially of CaO and can be further utilized, eg for road stabilization and acid neutralization. This results from the use of the earlier cyclone located upstream of the rotary kiln, which thus has the further advantage that the fines are not poisoned or contaminated to such an extent with MgO, $Al_2O_3$, $SiO_2$ and $Fe_2O_3$ impurities that the fines cannot be utilized further and have to be discarded.

The off gas from the further cyclone may be used to pretreat the carbon containing material, which may be anthracite. This may be effected by passing the off gas countercurrently to the anthracite in a direct or indirect heating drying kiln. At least some of the anthracite may be in briquette form.

The use of this dryer hence has the advantage that moisture in the anthracite which could be dangerous in the furnace, is driven off or removed.

The invention will now be described by way of example with reference to the accompanying drawings.

In the drawings,

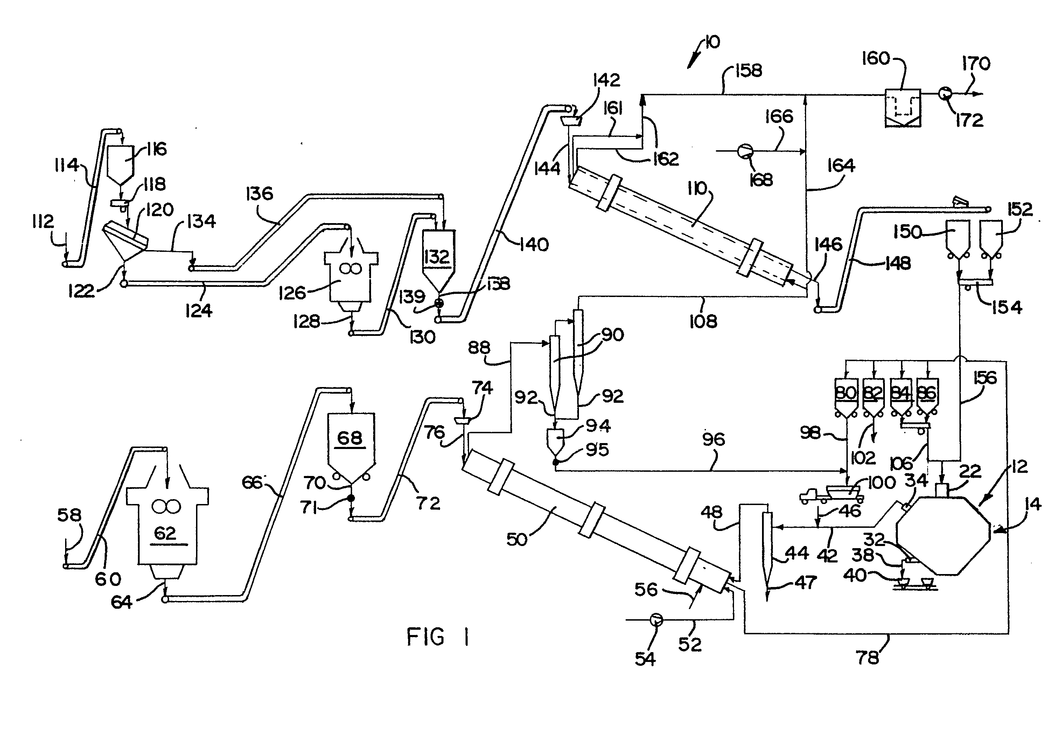

FIGURE 1 shows a simplified flow diagram of a process for producing calcium carbide according to the invention; and

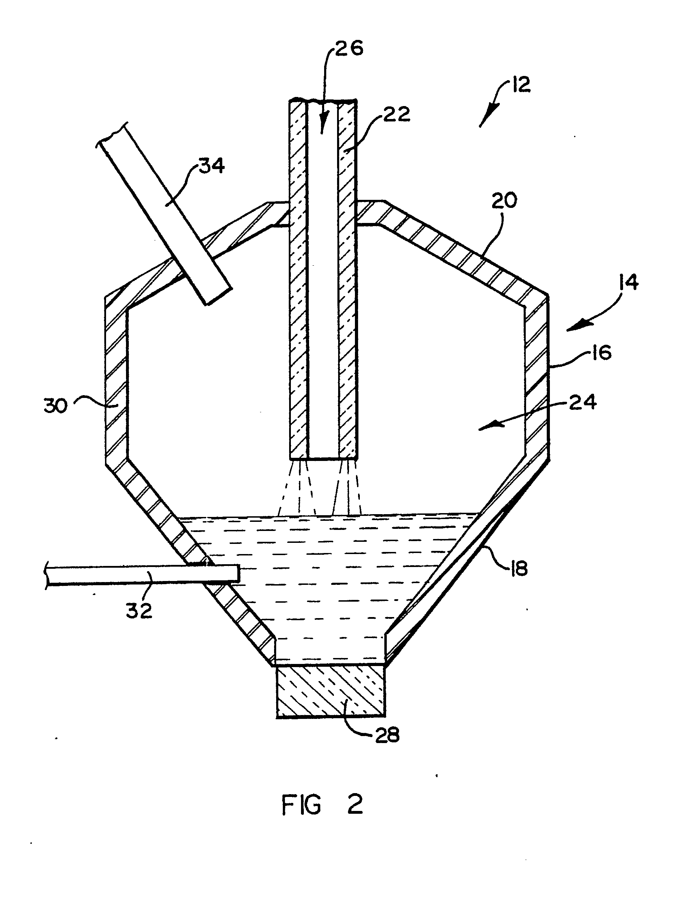

FIGURE 2 shows an enlarged sectional view of the plasma arc furnace shown in Figure 1.

In the drawings, reference numeral 10 generally indicates a process for producing calcium carbide.

The process 10 includes a closed plasma arc furnace, generally indicated by reference numeral 12. The furnace 12 includes a furnace shell, generally indicated by reference numeral 14. The shell 14 comprises a circular or cylindrical side wall 16, an inverted frusto-conical floor 18 depending downwardly from the wall 16, and a bulbous or frusto-conical roof 20 protruding upwardly from the side wall 16. A plasma burner or cathode 22 protrudes into a furnace chamber 24 defined by the shell 14. A passageway 26 extends along the centre of the electrode 22. In use, calcium oxide and anthracite in briquetted form are fed, as feed materials, into the furnace chamber 24 through the passageway 26, or through an independent charging duct (not shown). A counter electrode or anode 28 is provided in the floor 18. The shell 14 is lined with a retractory lining 30. A calcium carbide withdrawal passageway or tapspout 32 extends horizontally through the floor 18 and refractory lining 30. The tapspout 32 may be fitted with automatic tapping apparatus (not shown) comprising a carbon rod located within the passageway or tapspout 32, reciprocating means for reciprocating the carbon rod, and electrification means for supplying a direct current to the carbon rod to ensure that the inside of the passageway taphole is heated to a sufficient degree to maintain calcium carbide within the taphole in molten form. An off gas conduit 34 extends through the roof 20 of the furnace.

Calcium carbide product emerging from the tapspout 32 passes, via a flow line 38, into suitable conveyers 40 for cooling and further treatment.

An off gas flowline 42 leads from the conduit 34 to a dust cyclone 44. Upstream of the dust cyclone 44, a water injection flowline 46 leads into the flowline 42. A flowline 47, through which impurities separated from the off gas in the cyclone 44 can be discarded, leads from the bottom of the cyclone 44. A flow line 48 leads from the top of the cyclone 44 to the lower end of an inclined direct heating rotary kiln 50. A flowline 52, fitted with a blower 54, also leads into the lower end of the kiln 50, for introducing air into the lower end of the kiln thereby to form a combustible mixture with the off gases entering the kiln along the flowline 48. Burners (not shown) are provided at the lower end of the kiln, and a flowline 56, for feeding fuel gas to these burners may optionally also be provided.

The process 10 also includes a zone 58 in which calcium hydroxide ($Ca(OH)_2$) feed material, ie lime hydrate feed material, is introduced to the lower end of the belt conveyor 60. The lime hydrate feed material passes from the conveyor into the top of a lime hydrate briquetting machine 62. Lime hydrate briquettes pass, via a flowline 64, from the bottom of the briquetting machine 62 to a lime hydrate briquette conveyor 66. From the top of the conveyor 66, the lime hydrate briquettes pass into a holding vessel 68. From the holding vessel 68, the lime hydrate briquettes pass along a flowline 70 fitted with a starwheel feeder 71 or other flow control device, to the bottom of a lime hydrate briquette conveyor 72. From the conveyor 72 the lime hydrate briquettes pass into a chute 74 and from there, via a flowline 76, into the upper end of the kiln 50. In the kiln 50, the lime hydrate briquettes thus pass countercurrently to the off gases entering the kiln via the flowline 48. The velocity of the off gases is sufficient to classify the lime hydrate material, ie entrain lime hydrate particles having a particle size less than 1 mm. In addition, the lime hydrate is heated and calcined in the kiln 50 so that calcium oxide particles having a size of 1-25 mm emerge from the bottom of the kiln 50 and pass, along a flowline 78, to holding vessels or bins 80, 82, 84 and 86.

Off gas from the kiln 50 emerges from the upper end of the kiln 50 and passes along a flowline 88 into a nest of off gas dust cyclones 90. Fines or dust separated from the off gas in the cyclones 90 pass, by means of flowlines 92, into a dustbin 94. From the dustbin 94 they pass along a flowline 96, fitted with a starwheel feeder 95. The flowline 96 joins a flowline 98 leading from the bin 80 so that the fines or dust can be admixed with clarified calcium oxide material from the bin 80 and loaded into vehicles 100, eg for selling. A flowline 102 leads from the bin 82 so that the clarified calcium oxide can also be used elsewhere, eg in another chemical process (not shown). From the bins 84, 86, clarified calcium oxide can be fed onto a vibrating feeder 104 from where it passes, by means of a flowline 106, into the passageway 26 in the electrode 22, or into an alternative furnace charging chute (not shown).

Off gas from the cyclones 90 passes along a flowline 108, with some of the off gas entering the lower end of an anthracite drying kiln or drier 110. The kiln or drier 110 may be an indirect or direct heating kiln or drier.

The process 10 also includs a zone 112 in which particulate anthracite is introduced onto the lower end of an anthracite feed conveyor 114. From the upper end of the conveyer 114 the anthracite passes into an anthracite receiving bin 116, from there to a vibrating feeder 118 and from there onto an anthracite screen 120. Anthracite fines pass from the screen 120, along a flowline 122, onto a belt conveyor 124. The fines pass from the conveyer 124 into an anthracite briquetting machine 126. From the briquetting machine 126 they pass, via a flowline 128, to a conveyer 130. From the conveyer 130 they pass into an anthracite bin 132.

Coarse anthracite passes from the screen 120 along a flowline 134 to a conveyer 136. Coarse anthracite from the conveyer 136 also enters the bin 132.

Coarse anthracite as well as briquetted anthracite passes from the bin 132 along a flowline 138, fitted with a starwheel feeder 139 to a belt conveyer 140. From the belt conveyer 140, the anthracite passes into a chute 142. From the shute 142 it passes, via a flowline 144, into the upper end of the inclined drier 110. The coarse and briquetted anthracite is heated by indirect heating in the drier 110 by heat exchange with the off gases entering the drier along the flowline 108, and exit the drier 110 at its lower end to pass along a flowline 146 onto a dry anthracite conveyer 148. From the conveyer 148, the dried anthracite passes into bins 150, 152, and from the bins 150, 152 the anthracite is fed onto a vibrating feeder 154. From the vibrating feeder 154 the anthracite passes, via a flowline 156, which joints the flowline 106, into the passageway 26 of the electrode 22 or into an alternative furnace charging chute.

Off gases emerging from the drier 110 along a flowline 162 are first combined with water vapour (removed from the anthracite) exiting the drier 110 along a flowline 161, with the combined streams passing along a flowline 158. A portion of the off gases emanating from the cylones 90 is fed directly to the flowline 158 by means of a flowline 164. This off gas is admixed with air passing along a flowline 166 fitted with a blower 168. Waste gases from the filter state 160 pass to atmosphere via a flowline 170 fitted with a blower 172. Alternatively, the filter stage may be replaced by a wet scrubbing device (not shown).

In use, 11719 kg of lime hydrate material can enter the process at the zone 58, at atmospheric temperature (about 25°C) and at atmospheric pressure. All values given are based on a theoretical model developed by the Applicant. Thus, 11719 kg of briquetted lime hydrate material enters the upper end of the kiln 50 along the flowline 76. The calcium oxide feed material exits the kiln 50 at a temperature in excess of 900°C and passes along the flowline 78 into the hoppers 80, 82, 84, 86. 3581 kg/hr of this material, from bins 84 and 86, are introduced into the plasma arc furnace 10 at atmospheric pressure and at about 900°C. 2604 kg/hr of this material, from the bin 80, is disposed of, eg sold commercially, while 2364 kg/hr of this material passes from the bin 82 along flowline 102 for further processing. The material in the bins 80, 82 is allowed to cool to a suitable temperature dependent on its further use.

3204 kg/hr of anthracite material enters the process at the zone 112. Hence, about 3204 kg/hr of coarse and briquetted anthracite enters the kiln 110 along the flowline 144. The anthracite material emerging from the kiln 110 is at about 100°C. Anthracite is fed, at this temperature and at atmospheric pressure, to the furnace 10 at a rate of 3044 kg/hr.

In the furnace 10, the calcium oxide and carbon in the anthracite combine to form calcium carbide which is withdrawn through the tapspout 32 at a rate of 4199 kg/hr. The furnace operating temperature is typically about 2100°C, and hence the calcium carbide emerges from the furnace at this temperature.

Carbon monoxide off gas generated in the furnace 10 passes along the flowline 42 at a rate of about 2321 kg/hr, the off gases hence also being at a temperature of about 2100°C. Sufficient water is injected, through the flowline 46, into the off gas, to reduce the off gas temperature to about 500°C. This results in elemental Mg, Fe, Al and SiO in the off gas reacting with some of the CO present in form $MgO$, $Fe_2O_3$, $Al_2O_3$ and $SiO_2$, which condense or solidify. These solid impurities, which are in particulate form having a size of 2-5 microns, are removed from the off gas in the cyclone 44. The pretreated off gas passes to the lower end of the kiln where it is admixed with about 7447 kg/hr of air to form a combustible mixture. The combustible mixture is ignited by means of the burners. The resultant burning gas stream passing through the kiln clarifies lime hydrate feed material passing countercurrently through the kiln 50 as hereinbefore described, while also calcining the lime hydrate to calcium oxide.

12891 kg of off gas, at a temperature of about 350°C, enters the cyclones 90. 1090 kg/hr of off gas, still at about 350°C, enters the kiln 110, with the remainder of the off gas passing along the flowline 164. About 160 kg/hr of water vapour passes along the flowline 161 into the flowline 162, along which the 1090 kg/hr of off gas passes, now at a temperature of about 50°C.

If desired, the dustbag filter stage 160 can be replaced by a direct liquid scrubbing state.

In the kiln 50 the lime hydrate briquettes are calcined sufficiently such that the calcined briquettes emerging from the kiln contain less than 20% of the water that is present in the raw briquettes entering the kiln. The use of the rotary kiln results in severe breakage of the lime hydrate briquettes which can, however, apart from the classification to remove the particles having a size less than 1 mm as hereinbefore described, be tolerated by the plasma arc furnace 12. Finer feed materials can be used in plasma arc furnaces than is submerged arc furnaces. Thus, it would not be possible to use the rotary kiln, with its accompanying advantages, to pretreat the lime feed material in a submerged arc process. Moreover, the briquettes which are thus comprehensively calcined in the rotary kiln react readily in the furnace 12. Use of the rotary kiln 50 thus renders the briquettes into a form more beneficial to the furnace 12 that would be the case with other calcination means such as a moving grate with which a lower degree of calcination is achieved. In addition, as stated hereinbefore, the rotary kiln has the added advantage of classifying the feed material. If the fines in the feed material were allowed to enter the furnace 12 they would immediately be blown out of the furnace with the off gas, resulting in downstream buildup and blockage.

Furthermore, by using the rotary kiln 50, pretreatment especially precleaning of the off gas from the furnace is not essential so that the off gas can be routed directly from the furnace to the rotary kiln. However, pretreatment of the off gas to effect removal of elemental impurities to obtain the benefits resulting therefrom, can optionally be effected, as hereinbefore described.

The Applicant further believes that with the process according to the invention, substantially total recycle of lime material will be possible. In other words, all lime material converted to calcium carbide is reconverted to lime hydrate material on production of acetylene from the calcium carbide, with this lime hydrate material then being reintroduced into the zone 58. Thus it will only be necessary to add make-up lime hydrate material to the process.

A process 10 for producing calcium carbide includes operating a furnace 12 of the kind described by continuously feeding calcium oxide and carbon and/or carbon containing material as feed materials into the furnace chamber, subjecting the feed materials or solid burden in the chamber to a plasma torch generated between the plasma burner and the counter electrode, withdrawing calcium carbide intermittently or continuously by means of the calcium carbide withdrawal means, and withdrawing off gas continuously through the gas withdrawal means. Lime hydrate ($Ca(OH)_2$) material in agglomerated from passes through an elongate dryer 50, while the off gas passes through the dryer countercurrently to the lime hydrate material. The velocity of the gas is sufficient to entrain therein solid particles below a predetermined size and which are present in the lime hydrate material, thereby to pretreat the lime hydrate material by classifying it, and drying and calcining it to form calcium oxide (CaO) material.

**Claims**

1. In a process for producing calcium carbide which includes operating a furnace of the kind described by continuously feeding calcium oxide and carbon and/or carbon containing material as feed materials into the furnace chamber, subjecting the feed materials or solid burden in the chamber to a plasma torch generated between the plasma burner and the counter electrode, withdrawing calcium carbide intermittently or continuously by means of the calcium carbide withdrawal means, and withdrawing off gas continuously through the gas withdrawal means, the improvement characterized by passing lime hydrate ($Ca(OH)_2$) material in agglomerated form through an elongate dryer, while passing the off gas through the dryer countercurrently to the lime hydrate material with the velocity of the gas being sufficient to entrain therein solid particles below a predetermined size and which are present in the lime hydrate material, thereby to pretreat the lime hydrate material by classifying it, and drying and calcining it to form calcium oxide (CaO) material.

2. A process according to Claim 1, characterized in that the agglomerated lime hydrate material is in briquette form and the dryer is a direct heating rotary kiln, sufficient air then also being introduced into the rotary kiln to form a combustible mixture with the off gas, and the combustible gas mixture in the kiln being burnt, and at least a portion of the calcium oxide material thus formed is fed to the furnace as feed material for the calcium carbide production.

3. A process according to Claim 2, characterized in that the predetermined size is about 1 mm so that the feed material has particles of a size greater than 1 mm.

4. A process according to Claim 2 or Claim 3, characterized in that the off gas is routed directly to the kiln, without any intermediate treatment of the off gas.

5. A process according to Claim 2 or Claim 3, characterized in that the off gas is pretreated before entering the kiln by
cooling down the off gas so that at least some condensation or solidification of gaseous substances present in the off gas takes place; and
separating at least some of the condensed or solid substances from the off gas, thereby to produce pretreated off gas which then passes to the kiln.

6. A process according to Claim 5, characterized in that the cooling down of the off gas is effected by introducing sufficient water into the off gas to obtain an off gas temperature drop sufficient to give a desired degree of impurity solidification or condensation.

7. A process according to Claim 5 or Claim 6, characterized in that the separation of the impurities from the off gas is effected in a dust cyclone.

8. A process according to Claim 7, characterized in that it includes subjecting the off gas from the kiln to a further solids removal step to remove entrained solids or fines therefrom.

9. A process according to Claim 8, characterized in that the further solids removal is effected in at least one further dust cyclone.

10. A process according to Claim 9, characterized in that the carbon containing material is pretreated with the off gas from the further cyclone by passing the off gas countercurrently to the material in a direct or indirect heating drying kiln.

FIG I

FIG 2